# EUROPEAN PATENT SPECIFICATION

(11) **EP 3 068 988 B1**
(45) Date of publication and mention of the grant of the patent: **03.07.2019**
(21) Application number: 14809108.5
(22) Date of filing: 07.11.2014
(51) Int. Cl.: F01N 13/00, F01N 3/20, F01N 9/00, F01N 3/021

(54) **EXHAUST GAS CONTROL APPARATUS AND EXHAUST GAS CONTROL METHOD FOR ENGINE**
ABGASSTEUERUNGSVORRICHTUNG UND ABGASSTEUERUNGSVERFAHREN FÜR MOTOR
APPAREIL DE COMMANDE DE GAZ D'ÉCHAPPEMENT ET PROCÉDÉ DE COMMANDE DE GAZ D'ÉCHAPPEMENT POUR MOTEUR

(30) Priority: 11.11.2013 JP 2013233359
(43) Date of publication of application: 21.09.2016
(73) Proprietor: TOYOTA JIDOSHA KABUSHIKI KAISHA, Toyota-shi, Aichi-ken 471-8571 (JP)
(72) Inventor: IZUMI, Hayata, Toyota-shi Aichi-ken 471-8571 (JP); OTA, Hirohiko, Toyota-shi Aichi-ken 471-8571 (JP)
(74) Representative: D Young & Co LLP
(86) International application number: PCT/IB2014/002445
(87) International publication number: WO 2015/068031

(56) References cited:
- EP-A1- 2 143 900
- WO-A1-2013/132603
- WO-A2-2009/135010
- US-A1- 2010 242 447
- US-A1- 2015 298 061

## Description

### BACKGROUND OF THE INVENTION

### 1. Field of the Invention

The invention relates to an exhaust gas control apparatus for an engine which is provided with a filter which collects particulate matter in exhaust gas and a selective reduction catalyst which purifies a nitrogen oxide in the exhaust gas by a selective reduction reaction using ammonia as a reducing agent, and an exhaust gas control method for an engine.

### 2. Description of Related Art

In an exhaust gas control apparatus for an engine, if an ammonia adsorption amount of a selective reduction catalyst is insufficient, purification performance of a nitrogen oxide (NOx) may be sometimes reduced. If the ammonia adsorption amount becomes excessive, leakage of ammonia (ammonia slip) may sometimes occurs. For this reason, it is necessary to adjust an ammonia supply amount to the selective reduction catalyst such that the ammonia adsorption amount of the selective reduction catalyst is maintained at an appropriate amount.

The estimation of the ammonia adsorption amount of the selective reduction catalyst is performed, for example, by sequentially calculating an increased or decreased amount per unit time of the ammonia adsorption amount from the state of the exhaust gas control apparatus and integrating the value. In such a case, if there is a deviation in the calculated value of the increased or decreased amount per unit time, the deviation is accumulated, and thus the estimated value of the ammonia adsorption amount is sometimes greatly deviated from the actual value.

Meanwhile, with respect to a filter for particulate matter (PM) collection, in order to avoid clogging by accumulated PM, it is necessary to perform filter regeneration processing of regenerating the PM collection capability of the filter by burning the accumulated PM. The filter regeneration processing is performed by burning the accumulated PM by increasing an exhaust gas temperature in the PM filter by the supply of unburned fuel to exhaust gas, or the like, for example, post-injection or fuel injection into the exhaust gas by an exhaust fuel addition injector.

According to a rise in exhaust gas temperature when such filter regeneration processing is being executed, a bed temperature of the selective reduction catalyst is increased, and thus ammonia adsorbed to the catalyst may be desorbed. In an exhaust gas control apparatus for an engine described in Japanese Patent Application Publication No. 2010-261423 (JP 2010-261423 A), a deviation from the actual value is prevented by resetting the estimated value of the ammonia adsorption amount to "0" for every completion of the filter regeneration processing.

When the filter regeneration processing is executed at the time of an idle operation of an engine, or the like, according to the operation status of the engine at the time of the filter regeneration processing, there may be a case where an exhaust gas temperature during the execution of the processing is not sufficiently increased. In such a case, an ammonia desorption rate may be reduced, and thus ammonia adsorbed to the selective reduction catalyst may not be completely desorbed before the completion of the filter regeneration processing. In such a case, even though a certain amount of ammonia actually remains on the selective reduction catalyst, the estimated value of the ammonia adsorption amount is reset to "0" by the exhaust gas control apparatus described in Japanese Patent Application Publication No. 2010-261423 (JP 2010-261423 A). For this reason, the ammonia adsorption amount may be estimated to be less than the actual value. When an ammonia supply amount is controlled based on such an underestimated adsorption amount, the ammonia adsorption amount of the selective reduction catalyst becomes excessive. Thus, there is a possibility that the leakage of ammonia to the downstream, so-called ammonia slip, may occur.

In this manner, in a case of estimating the ammonia adsorption amount of the selective reduction catalyst and also resetting the value at the time of the completion of the filter regeneration processing, an exhaust gas temperature may not be sufficiently increased during the execution of the filter regeneration processing. Therefore, when desorption of ammonia from the selective reduction catalyst becomes insufficient, the estimated value of the ammonia adsorption amount may be deviated from the actual value, and thus there is a possibility that control may not be appropriately performed. Even when the estimation of the ammonia adsorption amount is not performed, in a case where the control of an exhaust gas control apparatus is performed on the assumption that ammonia has been desorbed from the selective reduction catalyst at the time of the completion of the filter regeneration processing, if there is a case where ammonia is not sufficiently desorbed from the selective reduction catalyst at the time of the completion of the filter regeneration processing, there is a possibility that the control may not be appropriately performed as well.

EP 2 143 900 A1 relates to an exhaust gas purification system for an internal combustion engine. US 2010/242447 A1 relates to ammonia load control for an SCR catalyst prior to DPF regeneration. WO 2009/135010 A2 relates to an apparatus, system and method for controlling ammonia slip from an SCR catalyst. US 2015/298061 A1 relates to an exhaust gas purification apparatus for an internal combustion engine.

### SUMMARY OF THE INVENTION

Particular aspects of the invention are defined in the appended claims.

The present invention provides an exhaust gas control apparatus for an engine in which it is possible to perform appropriate control according to an ammonia adsorption situation of a selective reduction catalyst.

According to a first teaching of the present invention, an exhaust gas control apparatus for an engine, the exhaust gas control apparatus includes a filter, a selective reduction catalyst, a reducing agent supply device and an electronic control unit. The filter is provided in an exhaust passage of the engine, the filter collects particulate matter in exhaust gas. The selective reduction catalyst is provided downstream of the filter in the exhaust passage. The selective reduction catalyst reduces nitrogen oxide in the exhaust gas by a selective reduction reaction using ammonia as a reducing agent. The reducing agent supply device is configured to supply the ammonia to the selective
reduction catalyst. The electronic control unit configured to perform filter regeneration processing of regenerating the capability of the filter to collect the particulate matter. The electronic control unit is configured to continue the filter regeneration processing in a case where an integrated value of time when a bed temperature of the selective reduction catalyst during execution of the filter regeneration processing exceeds a certain value is less than or equal to a default value, wherein the electronic control unit is configured to make the default value be variable according to an ammonia adsorption amount of the selective reduction catalyst at the time of start of the filter regeneration processing. The electronic control unit configured to end the filter regeneration processing in a case where the integrated value of time is more than the default value.

According to the above-described configuration, if the bed temperature of the selective reduction catalyst is in a sufficiently high state for more than a sufficient period of time during the execution of the filter regeneration processing, ammonia adsorbed to the selective reduction catalyst is desorbed before the completion of the filter regeneration processing. However, when it is difficult for the bed temperature of the selective reduction catalyst to be increased during the execution of the filter regeneration processing, ammonia adsorbed to the selective reduction catalyst may not be sufficiently desorbed before the regeneration of the filter is completed. In that respect, in the exhaust gas control apparatus for an engine configured as described above, the filter regeneration processing is continued until the integrated value of time when the bed temperature of the selective reduction catalyst during the execution of the filter regeneration processing exceeds a certain value exceeds the default value. For this reason, even when it is difficult for the bed temperature of the selective reduction catalyst to be increased during the execution of the filter regeneration processing, the sufficient desorption of ammonia becomes possible. Therefore, in the exhaust gas control apparatus for an engine configured as described above, it is possible to perform appropriate control according to the ammonia adsorption situation of the selective reduction catalyst.

A period needed for the sufficient desorption of ammonia from the selective reduction catalyst changes according to an ammonia adsorption amount. In the exhaust gas control apparatus, the electronic control unit may be configured to make the default value be variable according to an ammonia adsorption amount of the selective reduction catalyst at the time of start of the filter regeneration processing.

According to a second teaching of the present invention, an exhaust gas control method for an engine provided with a filter, a selective reduction catalyst and a reducing agent supply device, the filter provided in an exhaust passage of the engine, the filter collecting particulate matter in exhaust gas, the selective reduction catalyst provided downstream of the filter in the exhaust passage, the selective reduction catalyst reducing nitrogen oxide in the exhaust gas by a selective reduction reaction using ammonia as a reducing agent, and the reducing agent supply device configured to supply the ammonia to the selective reduction catalyst. The exhaust gas control method includes performing filter regeneration processing of regenerating the capability of the filter to collect the particulate matter, and continuing the filter regeneration processing in a case where an integrated value of time when a bed temperature of the selective reduction catalyst during execution of the filter regeneration processing exceeds a certain value is less than or equal to a default value, wherein the default value is variable according to an ammonia adsorption amount of the selective reduction catalyst. The exhaust gas control method includes ending the filter regeneration processing in a case where the integrated value of time is more than the default value.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram schematically showing the configuration of an intake and exhaust system of an engine to which an exhaust gas control apparatus according to a first embodiment is applied;
FIG. 2 is a graph showing the relationship between a bed temperature of a selective reduction catalyst device and an ammonia desorption rate;
FIG. 3A and 3B is a flowchart of a filter regeneration processing routine which is applied to the exhaust gas control apparatus for an engine according to the first embodiment; and
FIG. 4A and 4B is a flowchart of a filter regeneration processing routine which is applied to an exhaust gas control apparatus for an engine according to a second embodiment.

### DETAILED DESCRIPTION OF EMBODIMENTS

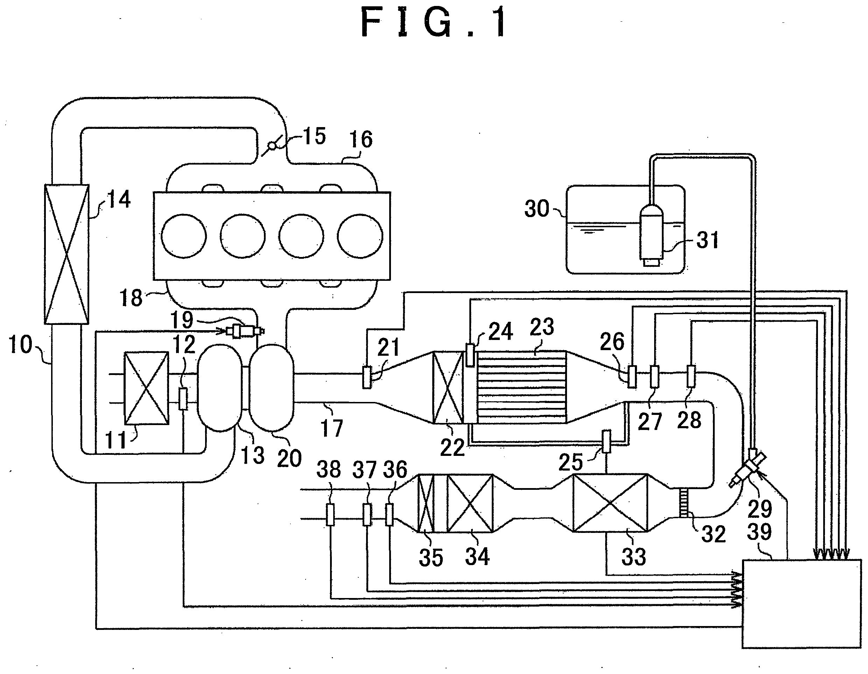

Hereinafter, a first embodiment of an exhaust gas control apparatus for an engine will be described in detail with reference to FIGS. 1 to 3. The exhaust gas control apparatus according to this embodiment is applied to an in-vehicle diesel engine.

As shown in FIG. 1, in an intake passage 10 of an engine to which the exhaust gas control apparatus for an engine according to this embodiment is applied, an air cleaner 11, an air flow meter 12, a compressor 13 of a turbocharger, an intercooler 14, a throttle 15, and an intake manifold 16 are installed in order from the upstream side. The air cleaner 11 filters intake air taken into the intake passage 10. The air flow meter 12 detects the flow rate of the intake air flowing through the intake passage 10. The intercooler 14-cools the intake air. The throttle 15 adjusts the flow rate of the intake air. The intake passage 10 is branched to each cylinder of the engine at the intake manifold 16 provided downstream of the throttle 15.

An exhaust manifold 18 which congregates exhaust gas of the respective cylinders is provided at the portion furthest upstream of an exhaust passage 17 of the engine. In order from the upstream, a fuel addition valve 19, a turbine 20 of the turbocharger, an oxidation catalyst 22, and a PM filter 23 are provided downstream of the exhaust manifold 18 in the exhaust passage 17. The fuel addition valve 19 adds fuel into the exhaust gas. The oxidation catalyst 22 oxidizes carbon oxide (CO) and hydrocarbons (HC) in the exhaust gas, thereby purifying the exhaust gas. The PM filter 23 collects particulate matter (PM) in the exhaust gas.

An inlet gas temperature sensor 21 which detects the temperature of the exhaust gas flowing into the oxidation catalyst 22 (an inlet gas temperature) is installed upstream of the oxidation catalyst 22 in the exhaust passage 17. At a portion between the oxidation catalyst 22 and the PM filter 23 in the exhaust passage 17, a middle gas temperature sensor 24 which detects the temperature of the exhaust gas flowing through the portion (a middle gas temperature) is installed. An outlet gas temperature sensor 26 , which detects the temperature of the exhaust gas having passed through the PM filter 23 (an outlet gas temperature) is installed downstream of the PM filter 23 in the exhaust passage 17. A differential pressure sensor 25 which detects a pressure difference of the exhaust gas between before and after the PM filter 23 is also provided in the exhaust passage 17.

A urea water addition valve 29 is installed downstream of the PM filter 23 in the exhaust passage 17. The urea water addition valve 29 adds urea water pumped out from a urea water tank 30 by a feed pump 31 into the exhaust gas. A dispersion plate 32 is installed downstream of the urea water addition valve 29 in the exhaust passage 17. The dispersion plate 32 disperses the urea water added to the exhaust gas.

Three catalyst devices, a first SCR device 33, a second SCR device 34, and an ammonia slip catalyst 35, are sequentially provided downstream of the dispersion plate 32 in the exhaust passage 17. Both the first SCR device 33 and the second SCR device 34 are catalyst devices which reduce nitrogen oxide in the exhaust gas by a selective catalytic reduction (SCR) reaction using ammonia as a reducing agent. The ammonia slip catalyst 35 is a catalyst device which decomposes ammonia leaked from the first SCR device 33 and the second SCR device 34 into nitrogen by a reduction reaction.

A first NOx sensor 27 and a pre-SCR gas temperature sensor 28 are installed upstream of the urea water addition valve 29 in the exhaust passage 17. The first NOx sensor 27 detects nitrogen oxide concentration of the exhaust gas before passing through these three catalyst devices (33, 34, 35). The pre-SCR gas temperature sensor 28 detects the temperature of the exhaust gas before flowing into the first SCR device 33 (a pre-SCR gas temperature). A post-ASC gas temperature sensor 36, a second NOx sensor 37, and a PM sensor 38 are installed downstream of the ammonia slip catalyst 35 in the exhaust passage 17. The post-ASC gas temperature sensor 36 detects the temperature of the exhaust gas having passed through the ammonia slip catalyst 35 (a post-ASC gas temperature). The second NOx sensor 37 detects nitrogen oxide concentration of the exhaust gas after passing through the three catalyst devices (33, 34, 35) described above. The PM sensor 38 detects the amount of particulate matter which is contained in the exhaust gas after passing through the three catalyst devices (33, 34, 35) described above.

The engine provided with such an exhaust gas control apparatus is controlled by an electronic control unit 39. The electronic control unit 39 is provided with a central processing unit (CPU), a read-only memory (ROM), and a random access memory (RAM). The CPU executes various arithmetic processing related to engine control. In the ROM, a program or data for control is stored. In the RAM, the calculation results of the CPU, the detection result of a sensor, or the like is stored temporarily. Detection signals of various sensors detecting the operational status of the engine are input to the electronic control unit 39. In the detection signal which is input, detection signals of the above-described respective sensors (21, 24 to 28, 36 to 38) provided in the exhaust gas control apparatus are also included. The electronic control unit 39 performs the control of the exhaust gas control apparatus as part of the engine control.

The electronic control unit 39 executes filter regeneration processing for preventing clogging of the PM filter 23 in the control of the exhaust gas control apparatus. That is, the electronic control unit 39 estimates a PM accumulation amount of the PM filter 23 by a pressure difference of the exhaust gas between before and after the PM filter 23, which is detected by the differential pressure sensor 25, for example, or the like. If the estimated accumulation amount reaches a certain value, the electronic control unit 39 executes fuel addition to the exhaust gas by the fuel addition valve 19. If unburned fuel added to the exhaust gas flows into the oxidation catalyst 22, carbon oxide (CO) and hydrocarbons (HC) which are contained in the unburned fuel are oxidized and an exhaust gas temperature rises due to reaction heat at the moment. In this way, a bed temperature of the PM filter 23 is increased, and thus the accumulated PM is burned.

In the exhaust gas control apparatus for an engine according to this embodiment, NOx in the exhaust gas is reduced by the first SCR device 33 and the second SCR device 34. The reduction of NOx in the first SCR device 33 and the second SCR device 34 is performed by a selective reduction reaction using ammonia as a reducing agent. Ammonia which is used in the selective reduction reaction is produced by the pyrolysis or the hydrolysis in the exhaust gas, of urea water added to the exhaust gas by the urea water addition valve 29.

To maintain the purification performance of the first SCR device 33 and the second SCR device 34, it is necessary to maintain a state where a sufficient amount of ammonia is adsorbed to the first SCR device 33 and the second SCR device 34. On the other hand, when the ammonia adsorption amounts of the first SCR device 33 and the second SCR device 34 become excessive, so-called ammonia slip in which ammonia leaks out to the downstream occurs. The ammonia slip catalyst 35 which decomposes ammonia is provided downstream of the first SCR device 33 and the second SCR device 34. However, if the ammonia slip occurs on a regular basis, there is a possibility that ammonia may leak out to the outside air without complete decomposition of ammonia.

The electronic control unit 39 sequentially calculates an increased or decreased amount per unit time of ammonia adsorbed to the first SCR device 33 and the second SCR device 34 and integrates the value, thereby estimating the ammonia adsorption amount thereof. The electronic control unit 39 adjusts a urea water addition amount of the urea water addition valve 29 such that the estimated ammonia adsorption amount (an estimated ammonia adsorption amount) is maintained at an appropriate amount.

The increased or decreased amount per unit time of an ammonia adsorption amount is obtained by being estimated from the addition amount of urea water of the urea water addition valve 29, an exhaust gas temperature, or the like, and there is a certain degree of error in the value. For this reason, there is a case where the value of an estimated ammonia adsorption amount which is obtained by integrating such an increased or decreased amount may be greatly deviated from the actual value due to accumulation of an error.

When an exhaust gas temperature rises due to the filter regeneration processing described above, the bed temperatures of the first SCR device 33 and the second SCR device 34 rise, and thus ammonia adsorbed thereto is desorbed. The electronic control unit 39 reduces a difference between an estimated value of an ammonia adsorption amount and the actual value by resetting the value of the estimated ammonia adsorption amount to "0" for every completion of the filter regeneration processing.

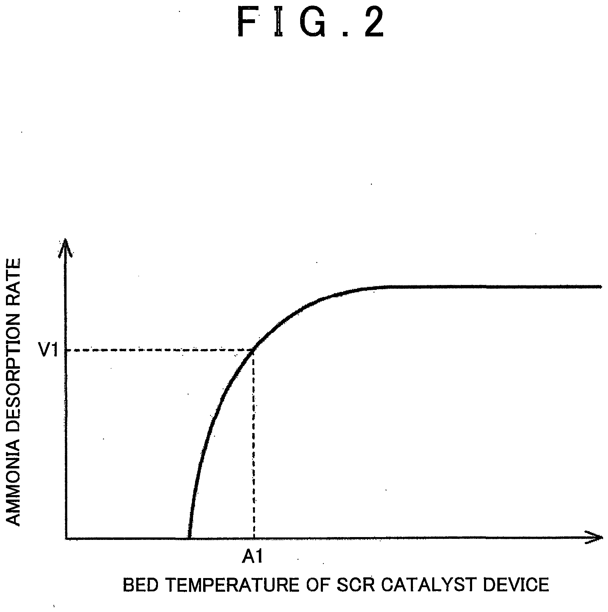

As shown in FIG. 2, if the bed temperatures of the first SCR device 33 and the second SCR device 34 (hereinafter described as an "SCR bed temperature") are low, an ammonia desorption rate is reduced. When the filter regeneration processing is executed during an idle operation of the engine, or the like, an exhaust gas temperature may not sufficiently increase during the execution of the regeneration processing. Thus, the SCR bed temperature does not sufficiently rise. For this reason, when an exhaust gas temperature during the execution of the filter regeneration processing is in a low state, ammonia adsorbed to the first SCR device 33 and the second SCR device 34 may not be sufficiently desorbed until the regeneration of the PM filter 23 is completed.

In the exhaust gas control apparatus for an engine according to this embodiment, in a case where the integrated value of time when the SCR bed temperature during the execution of the filter regeneration processing exceeds a certain value is less than or equal to a default value, the execution of the filter regeneration processing is continued. Hereinafter, the details of the filter regeneration processing in this embodiment will be described.

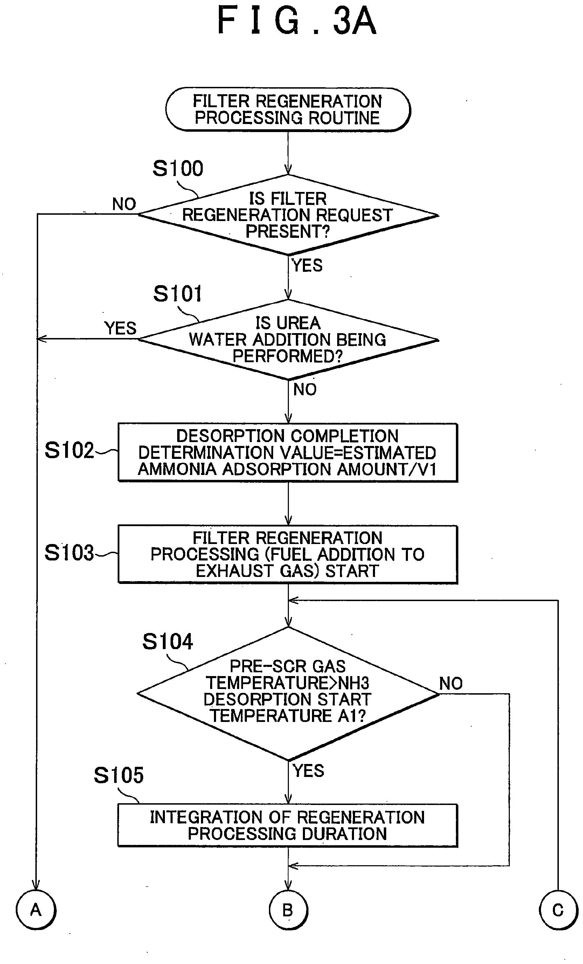

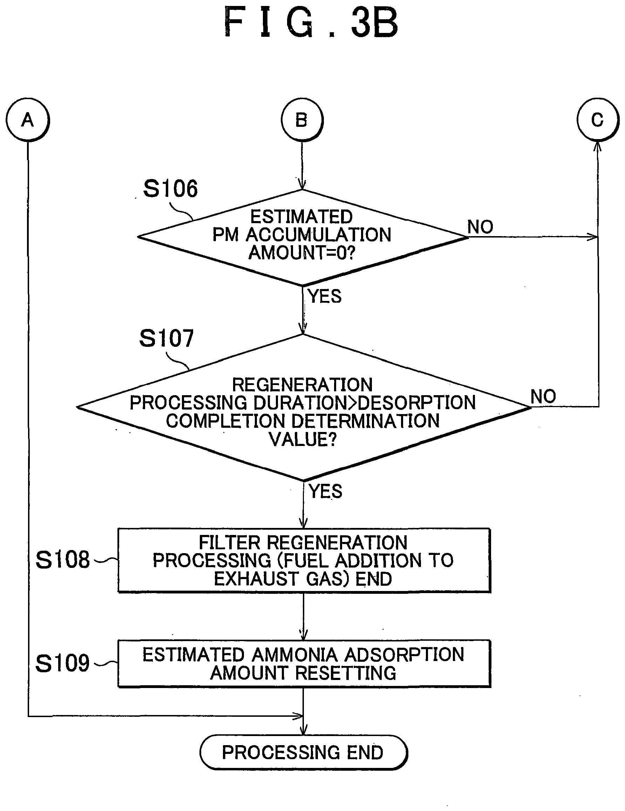

A filter regeneration processing routine shown in FIG. 3A and 3B shows the processing procedure of the filter regeneration processing in the exhaust gas control apparatus of this embodiment. The electronic control unit 39 executes the filter regeneration processing in the exhaust gas control apparatus of this embodiment. The electronic control unit 39 executes the filter regeneration processing according to the procedure of the routine shown in FIG. 3 A and 3B.

In the processing of the routine shown in FIG. 3 A and 3B, first, the electronic control unit 39 starts to execute the routine to confirm the presence or absence of a regeneration request of the PM filter 23 in Step S100. The regeneration of the PM filter 23 is requested when an estimated PM accumulation amount of the PM filter 23 is greater than or equal to a predetermined determination value. Here, when the regeneration of the PM filter 23 is not requested (NO)in Step S100, the electronic control unit 39 ends the present processing of this routine.. When the regeneration of the PM filter 23 is requested (YES) in Step S100, the electronic control unit 39 proceeds the processing to Step S101. In addition, the estimated PM accumulation amount is an estimated value of the amount of PM accumulated on the PM filter 23 and the value is obtained from a pressure difference of exhaust gas between before and after the PM filter 23, which is detected by the differential pressure sensor 25, for example.

In subsequent Step S101, the electronic control unit 39 executes the routine to confirm whether or not urea water addition of the urea water addition valve 29 is being performed. When the urea water addition is being performed (YES), the electronic control unit 39 ends the present processing of this routine. When the urea water addition is not being performed (NO), the processing proceeds to Step S102.

In subsequent Step S102, a value obtained by dividing the estimated ammonia adsorption amount at that time by a default value V1 is set as a desorption completion determination value. Further, in Step S103, the filter regeneration processing is started. That is, fuel addition to exhaust gas by the fuel addition valve 19 is started. Then, the processing of the following Steps S104 to S107 is repeatedly executed for every control period until an affirmative determination (YES) is made in Step S107.

In Step S104, whether or not the pre-SCR gas temperature which is detected by the pre-SCR gas temperature sensor 28, that is, the temperature of exhaust gas flowing into the first SCR device 33, is higher than a predetermined NH₃ desorption start temperature A1 is determined. The pre-SCR gas temperature here is used as an index value of the SCR bed temperature.

As for the NH₃ desorption start temperature A1, the value thereof is set as the pre-SCR gas temperature in which the desorption rate of ammonia (NH₃) from the first SCR device 33 and the second SCR device 34 becomes the above-described default value V1. The ammonia desorption rate here indicates an ammonia desorption amount per control period described above. That is, the desorption completion determination value which is set in Step S103 indicates the number of control periods needed to allow sufficient desorption of ammonia adsorbed to the first SCR device 33 and the second SCR device 34 when the ammonia desorption rate is the above-described default value V1.

If in Step S104, the pre-SCR gas temperature is less than or equal to the NH₃ desorption start temperature A1 (NO), the processing directly proceeds to Step S106. In contrast, if the pre-SCR gas temperature is higher than the NH₃ desorption start temperature A1 (YES), the processing proceeds to Step S105, and after the integration of regeneration processing duration is performed in Step S105, the processing proceeds to Step S106. The regeneration processing duration is a counter which is used in order to determine the duration of the filter regeneration processing. The value of the regeneration processing duration is incremented by "1" for each integration processing in Step S105.

In subsequent Step S106, the electronic control unit 39 determines whether or not the estimated PM accumulation amount has become "0." That is, the electronic control unit 39 determines whether or not the regeneration of the PM filter 23 has been completed. The estimated PM accumulation amount is an estimated value of the amount of PM accumulated on the PM filter 23 and the value thereof is obtained by a pressure difference of exhaust gas between before and after the PM filter 23, which is detected by the differential pressure sensor 25, for example. When the estimated PM accumulation amount has not yet become "0", and thus the regeneration of the PM filter 23 has not been completed (NO), the processing is returned to Step S104 and the processing of Step S104 or later is executed again in the next control period. In contrast, when the estimated PM accumulation amount has become "0", and thus the regeneration of the PM filter 23 has been completed (YES), the processing proceeds to Step S107.

In subsequent Step S107, the electronic control unit 39 determines whether or not the regeneration processing duration exceeds the desorption completion determination value calculated in the processing of Step S102. When the regeneration processing duration is less than or equal to the desorption completion determination value (NO) in Step S107, the processing is returned to Step S104. The processing of Step S104 and the later Steps thereof is executed again in the next control period. In contrast, if in Step S107, the regeneration processing duration exceeds the desorption completion determination value (YES), the processing proceeds to Step S108.

In subsequent Step S108, the filter regeneration processing, that is, the fuel addition to exhaust gas by the fuel addition valve 19, is ended. Then, in subsequent Step S109, the value of the estimated ammonia adsorption amount is reset to "0", and thereafter, the present processing of this routine is ended.

An operation of the exhaust gas control apparatus for an engine according to this embodiment will be described. In the exhaust gas control apparatus according to this embodiment, if the PM accumulation amount of the PM filter 23 reaches a default value, the filter regeneration processing is executed. If the filter regeneration processing is started, unburned fuel is supplied to exhaust gas by the fuel addition valve 19 and carbon oxide (CO) and hydrocarbons (HC) in the unburned fuel are oxidized by the oxidation catalyst 22, whereby the temperature of the exhaust gas flowing into the PM filter 23 is increased. In this way, PM accumulated on the PM filter 23 is burned.

At this time, exhaust gas having a higher temperature due to the combustion of the PM flows into the first SCR device 33 and the second SCR device 34. The SCR bed temperature is increased due to the heat of the exhaust gas having a high temperature and ammonia adsorbed thereto is desorbed.

When the filter regeneration processing is executed during an idle operation of an engine, or the like, according to the operational status of the engine during the execution of the filter regeneration processing, there is a case where the temperature of exhaust gas flowing into the first SCR device 33 and the second SCR device 34 does not become sufficiently high during the execution of the filter regeneration processing. In such a case, the SCR bed temperature does not become sufficiently high and a desorption rate of ammonia is reduced, and thus there is a possibility that ammonia adsorbed to the first SCR device 33 and the second SCR device 34 may not be completely desorbed until the regeneration of the PM filter 23 is completed.

In that respect, in the exhaust gas control apparatus for an engine according to this embodiment, in a case where the regeneration processing duration that is the integrated value of time when the SCR bed temperature (the pre-SCR gas temperature) during the execution of the filter regeneration processing exceeds the NH₃ desorption start temperature A1 is less than or equal to the desorption completion determination value, the filter regeneration processing is continued regardless of whether or not the regeneration of the PM filter 23 has been completed. For this reason, even when an exhaust gas temperature does not become sufficiently high during the execution of the filter regeneration processing, at the time of the completion thereof, the ammonia adsorption amounts of the first SCR device 33 and the second SCR device 34 are sufficiently reduced until they are regarded substantially as "0".

In this embodiment, the pre-SCR gas temperature is used as an index value of a bed temperature of a selective reduction catalyst. In this embodiment, the regeneration processing duration that indicates the integrated value of time when the SCR bed temperature (the pre-SCR gas temperature) during the execution of the filter regeneration processing becomes higher than the NH₃ desorption start temperature A1 is equivalent to the "integrated value of time when a bed temperature of a selective reduction catalyst during the execution of the filter regeneration processing exceeds a certain value exceeds a default value". In addition, in this embodiment, in a case where the bed temperature of the selective reduction catalyst during the execution of the filter regeneration processing is less than or equal to the desorption completion determination value, the desorption completion determination value is equivalent to the "default value" in which the filter regeneration processing is continued.

According to the exhaust gas control apparatus for an engine of this embodiment described above, the following effect can be exhibited. In this embodiment, when the integrated value of time when the SCR bed temperature during the execution of the filter regeneration processing exceeds a certain value is less than or equal to the desorption completion determination value, the filter regeneration processing is continued. For this reason, at the time of the completion of the filter regeneration processing, the creation of a state where the ammonia adsorption amounts of the first SCR device 33 and the second SCR device 34 are sufficiently reduced is guaranteed more reliably. Therefore, it is possible to perform appropriate control according to ammonia adsorption situations of the first SCR device 33 and the second SCR device 34.

In this embodiment, the desorption completion determination value is set so as to be variable according to the estimated ammonia adsorption amounts of the first SCR device 33 and the second SCR device 34 at the time of the start of the filter regeneration processing. For this reason, regardless of the more or less of the ammonia adsorption amounts of the first SCR device 33 and the second SCR device 34 at the time of the start of the filter regeneration processing, it is possible to appropriately set an execution period of the filter regeneration processing such that ammonia is reliably desorbed.

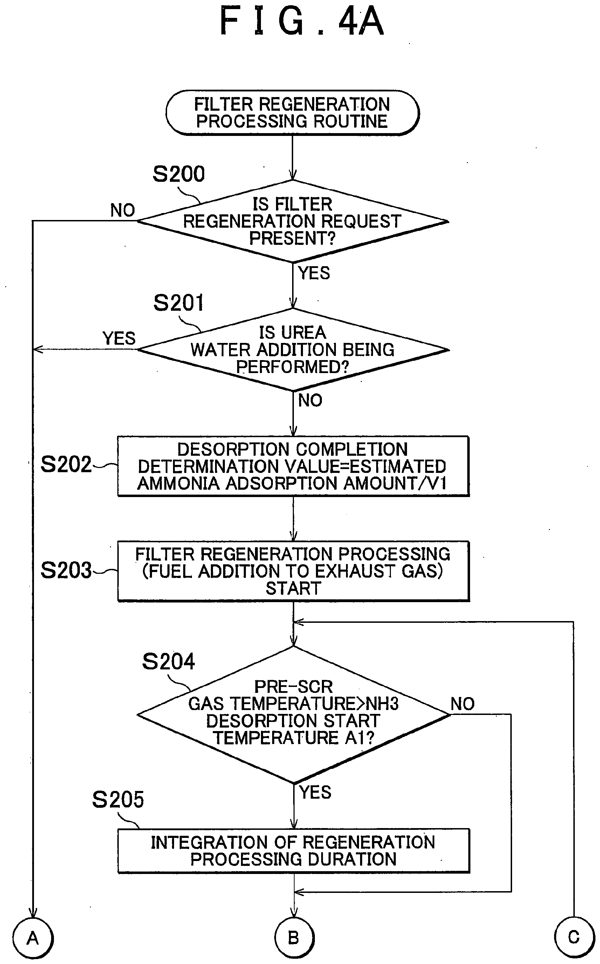

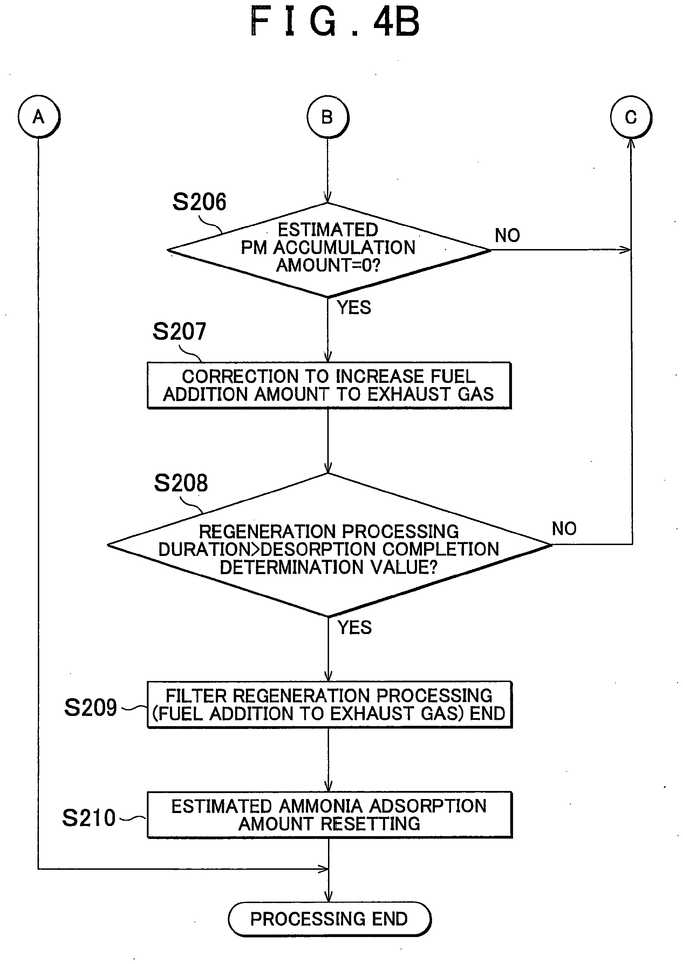

Next, a second embodiment of the exhaust gas control apparatus for an engine will be described in detail with reference to FIG. 4 A and 4B. In addition, in this embodiment, a configuration shared by the first embodiment described above is denoted by the same reference numeral and the detailed description thereof is omitted.

In the first embodiment, even if the regeneration of the PM filter 23 is completed, if the integrated value of time when the SCR bed temperature during the execution exceeds a certain value is less than or equal to the desorption determination value, the filter regeneration processing is continued. However, even when the filter regeneration processing is continued after the completion of the regeneration of the PM filter 23, all the PM accumulated on the PM filter 23 may be already burned. Therefore, a rise in exhaust gas temperature due to the combustion may not be expected, and thus the SCR bed temperature may not be sufficiently increased. Therefore, in this embodiment, at the time of the continuation of the filter regeneration processing after the regeneration of the PM filter 23 is completed, the amount of unburned fuel which is supplied to exhaust gas in order to increase an exhaust gas temperature is increased more than before the completion of the regeneration so as to secure the SCR bed temperature needed for the desorption of ammonia.

A filter regeneration processing routine shown in FIG. 4 A and 4B shows the processing procedure of filter regeneration processing in the exhaust gas control apparatus of this embodiment. The electronic control unit 39 executes the filter regeneration processing in the exhaust gas control apparatus of this embodiment. The electronic control unit 39 executes the filter regeneration proceeding.

In the processing of this routine shown in FIG. 4A and 4B, first, the electronic control unit 39 starts to execute the routine to confirm the presence or absence of a regeneration request of the PM filter 23, that is, whether or not the PM accumulation amount of the PM filter 23 is greater than or equal to a predetermined determination value in Step S200. When the regeneration of the PM filter 23 is not requested (NO) in Step S200, the electronic control unit 39 ends the present processing of this routine. In contrast, when the regeneration of the PM filter 23 is requested (YES) in Step S200, the electronic control unit 39 proceeds the processing to Step S201. In Step S201, whether or not urea water addition of the urea water addition valve 29 is being performed is confirmed. Then, if the urea water addition is being performed (YES), the present processing of this routine is directly ended, and if the urea water addition is not being performed (NO), the processing proceeds to Step S202.

In subsequent Step S202, the electronic control unit 39 sets a desorption completion determination value by dividing the estimated ammonia adsorption amount at that time by the default value V1. In subsequent Step S203, the filter regeneration processing, that is, fuel addition to exhaust gas by the fuel addition valve 19, is started. Then, the processing of the following Steps S204 to S208 is repeatedly executed for every control period until an affirmative determination (YES) is made in Step S208.

That is, in Step S204, whether or not the pre-SCR gas temperature that is an index value of the SCR bed temperature is higher than the NH₃ desorption start temperature A1 is determined. Then, when the pre-SCR gas temperature is less than or equal to the NH₃ desorption start temperature A1 (NO), the processing directly proceeds to Step S206. When the pre-SCR gas temperature is higher than the NH₃ desorption start temperature A1 (YES), after the integration of regeneration processing duration is performed in Step S205, the processing proceeds to Step S206.

In subsequent Step S206, the electronic control unit 39 executes the routine to confirm whether or not the estimated PM accumulation amount has been "0", that is, whether or not the regeneration of the PM filter 23 has been completed. When the estimated PM accumulation amount has not yet been become "0", the electronic control unit 39 determines the regeneration of the PM filter 23 has not been completed (NO) in Step S206, the electronic control unit 39 returns the processing to Step S204. Then, the processing of Step S204 and the later Steps thereof is executed again in the next control period. In contrast, if the estimated PM accumulation amount has become "0", and thus the regeneration of the PM filter 23 has been completed (YES), after a fuel addition amount to exhaust gas by the fuel addition valve 19 is corrected so as to be increased in Step S207, the processing proceeds to Step S208.

In subsequent Step S208, the electronic control unit 39 determines whether or not the regeneration processing duration exceeds the desorption completion determination value. When the regeneration processing duration is less than or equal to the desorption completion determination value (NO) in Step S208, the processing is returned to Step S204 and the processing of Step S204 and the later Steps thereof is executed again in the next control period. In contrast, if the regeneration processing duration exceeds the desorption completion determination value (YES), the processing proceeds to Step S209.

In subsequent Step S209, the electronic control unit 39 ends the filter regeneration processing, that is, the fuel addition to exhaust gas by the fuel addition valve 19. Then, in subsequent Step S210, the value of the estimated ammonia adsorption amount is reset to "0", and thereafter, the present processing of this routine is ended.

Next, an operation of this embodiment will be described. In the exhaust gas control apparatus for an engine according to this embodiment, when a state where an exhaust gas temperature during the execution of the filter regeneration processing is not sufficiently increased is created, an execution period of the filter regeneration processing is extended, and thus the execution is continued even after the completion of the regeneration of the PM filter 23. When the regeneration of the PM filter 23 is completed, all the PM accumulated on the PM filter 23 is burned, and therefore, there is a possibility that a rise in exhaust gas temperature due to the combustion may not be expected. For this reason, the SCR bed temperature may not be sufficiently increased until a sufficient ammonia desorption rate is obtained.

In that respect, in the exhaust gas control apparatus for an engine according to this embodiment, at the time of the extension of the filter regeneration processing after the completion of the regeneration of the PM filter 23, the fuel addition amount to exhaust gas by the fuel addition valve 19 is corrected so as to be increased. For this reason, even after the completion of the regeneration of the PM filter 23, the SCR bed temperature is sufficiently increased, and thus ammonia adsorbed thereto is suitably desorbed.

According to the exhaust gas control apparatus for an engine of this embodiment described above, in addition to the effect of the first embodiment described above, the following effect can be further exhibited. In this embodiment, at the time of the continuation of the filter regeneration processing after the regeneration of the PM filter 23 is completed, the amount of unburned fuel which is supplied to exhaust gas in order to increase an exhaust gas temperature is increased more than before the completion of the regeneration. For this reason, even after the regeneration of the PM filter 23 is completed and thus all the PM accumulated on the PM filter 23 is burned, it is possible to proceed with desorption of ammonia by sufficiently increasing the SCR bed temperature.

The above-described embodiments can also be modified and implemented as follows. In the above-described embodiments, the desorption completion determination value is calculated according to the estimated ammonia adsorption amount at the time of the start of the filter regeneration processing. However, the value may be set as a constant. For example, when the urea water addition amount is controlled such that the estimated ammonia adsorption amount is maintained at an appropriate amount, the ammonia adsorption amount at the time of the start of the filter regeneration processing usually becomes a substantially constant value. For this reason, even when the desorption completion determination value is set as a constant, it is possible to set a period of the filter regeneration processing such that ammonia is reliably desorbed.

In the above-described embodiments, the pre-SCR gas temperature is used as the index value of the bed temperature of the selective reduction catalyst. However, the bed temperature may be directly detected or may also be estimated from the operational status of an engine, the amount of unburned fuel added to exhaust gas, or the like.

In the above-described embodiments, the estimated PM accumulation amount is obtained from a differential pressure between before and after the PM filter 23. However, it may be obtained in other ways. For example, the estimated PM accumulation amount may be obtained, for example, by calculating an increased or decreased amount of the PM accumulation amount of the PM filter 23 per unit time from a PM discharge amount of an engine per unit time obtained from the operational status of the engine, and a burning rate of PM obtained from the bed temperature of the PM filter 23 during the execution of the filter regeneration processing, and integrating the calculated increased or decreased amount.

In the above-described embodiments, the supply of ammonia to the first SCR device 33 and the second SCR device 34 is performed by adding urea water to exhaust gas upstream of the first SCR device 33 and the second SCR device 34 by the urea water addition valve 29. However, the supply of ammonia thereto may be performed in other ways.

In the above-described embodiments, the estimated ammonia adsorption amount is calculated by estimating and obtaining an increased or decreased amount per unit time of the ammonia adsorption amount from an addition amount of urea water of the urea water addition valve 29, an exhaust gas temperature, or the like and integrating the estimated value. However, the estimated ammonia adsorption amount may be calculated in other ways. If the estimated ammonia adsorption amount is reset at the time of the completion of the filter regeneration processing, as long as the ammonia adsorption amount is not sufficiently reduced at the time of the completion of the filter regeneration processing, there is a possibility that the value may be deviated from the actual value. For this reason, when an exhaust gas temperature is not sufficiently increased during the execution of the filter regeneration processing, and thus it is difficult for desorption of ammonia to proceed, if the execution period is extended, it is possible to make the desorption completion of ammonia at the time of the processing completion more reliable.

In the above-described embodiments, the estimated ammonia adsorption amount is used for the control of the urea water addition amount or the like and the value is reset at the time of the completion of the filter regeneration processing. For this reason, when the desorption of ammonia from the first SCR device 33 and the second SCR device 34 is not completed at the time of the completion of the filter regeneration processing, control using the value may not be appropriately executed because the estimated ammonia adsorption amount is deviated from the actual value. Even when the calculation of the estimated ammonia adsorption amount is not performed, as long as the control of the exhaust gas control apparatus is performed on the assumption that ammonia of the first SCR device 33 and the second SCR device 34 is sufficiently desorbed at the time of the completion of the filter regeneration processing, control also may not be appropriately performed because the desorption of ammonia becomes insufficient at the time of the completion of the filter regeneration processing. For this reason, the extension of the execution period of the filter regeneration processing when an exhaust gas temperature is in a low state can exhibit an effect even in an exhaust gas control apparatus in which the estimation of an ammonia adsorption amount is not performed.

In the above-described embodiments, the filter regeneration processing is performed by fuel addition to exhaust gas. The present invention is not limited thereto, and the filter regeneration processing may be performed in other ways such as post-injection in the latter period of combustion stroke, or direct heating of exhaust gas or the PM filter 23 by a burner or a heater, for example.

In the above-described embodiments, two catalyst devices, the first SCR device 33 and the second SCR device 34, are provided as the selective reduction catalyst which purifies a nitrogen oxide in exhaust gas by a selective reduction reaction using ammonia as a reducing agent. The present invention is not limited thereto, .and only one or three or more of such selective reduction catalysts may be provided. As long as it is a configuration having a filter for PM collection, a selective reduction catalyst provided downstream of the filter, and a reducing agent supply device which supplies ammonia to the selective reduction catalyst, the configuration of the exhaust gas control apparatus may be arbitrarily changed.

## Claims

1. An exhaust gas control apparatus for an engine, the exhaust gas control apparatus comprising:
a filter (23) provided in an exhaust passage (17) of the engine, the filter (23) collecting particulate matter in exhaust gas;
a selective reduction catalyst (33, 34) provided downstream of the filter (23) in the exhaust passage (17), the selective reduction catalyst (33, 34) reducing nitrogen oxide in the exhaust gas by a selective reduction reaction using ammonia as a reducing agent;
a reducing agent supply device (29) configured to supply the ammonia to the selective reduction catalyst (33, 34); and
an electronic control unit (39) configured to:
perform filter regeneration processing for regenerating a capability of the filter (23) to collect the particulate matter;
continue the filter regeneration processing in a case where an integrated value of time, when a bed temperature of the selective reduction catalyst (33, 34) during execution of the filter regeneration processing exceeds a certain value, is less than or equal to a default value, wherein the electronic control unit (39) is configured to make the default value be variable according to an ammonia adsorption amount of the selective reduction catalyst (33, 34) at the time of start of the filter regeneration processing; and
end the filter regeneration processing in a case where the integrated value of time is more than the default value.

2. An exhaust gas control method for an engine provided with a filter (23), a selective reduction catalyst (33, 34) and a reducing agent supply device (29), the filter (23) provided in an exhaust passage (17) of the engine, the filter (23) collecting particulate matter in exhaust gas, the selective reduction catalyst (33, 34) provided downstream of the filter (23) in the exhaust passage (17), the selective reduction catalyst (33, 34) reducing nitrogen oxide in the exhaust gas by a selective reduction reaction using ammonia as a reducing agent, and the reducing agent supply device (29) configured to supply the ammonia to the selective reduction catalyst (33, 34), the exhaust gas control method comprising:
performing filter regeneration processing for regenerating a capability of the filter (23) to collect the particulate matter;
continuing the filter regeneration processing in a case where an integrated value of time, when a bed temperature of the selective reduction catalyst (33, 34) during execution of the filter regeneration processing exceeds a certain value, is less than or equal to a default value, wherein the default value is variable according to an ammonia adsorption amount of the selective reduction catalyst (33, 34) at the time of start of the filter regeneration processing; and
ending the filter regeneration processing in a case where the integrated value of time is more than the default value.

## Patentansprüche

1. Abgassteuerungsvorrichtung für einen Motor, wobei die Abgassteuerungsvorrichtung Folgendes umfasst:
einen Filter (23), bereitgestellt in einer Abgaspassage (17) des Motors, wobei der Filter (23) Feststoffpartikel im Abgas erfasst;
einen Katalysator zur selektiven Reduktion (33, 34), dem Filter (23) in der Abgaspassage (17) nachgelagert bereitgestellt, wobei der Katalysator (33, 34) zur selektiven Reduktion Stickoxid in dem Abgas durch eine Reaktion zur selektiven Reduktion unter Verwendung von Ammoniak als Reduktionsmittel reduziert;
eine Reduktionsmittelzuführvorrichtung (29), dazu ausgelegt, den Stickstoff dem Katalysator (33, 34) zur selektiven Reduktion zuzuführen; und
eine elektronische Steuereinheit (39), die dazu ausgelegt ist:
eine Filterregenerationsverarbeitung auszuführen, um eine Fähigkeit des Filters (23) zum Erfassen der Feststoffpartikel zu regenerieren;
die Filterregenerationsverarbeitung in einem Fall fortzusetzen, in dem ein integrierter Wert von Zeit, wenn eine Betttemperatur des Katalysators (33, 34) zur selektiven Reduktion während der Ausführung der Filterregenerationsverarbeitung einen bestimmten Wert überschreitet, kleiner als oder gleich groß wie ein Standardwert ist, wobei die elektronische Steuereinheit (39) dazu ausgelegt ist, den Standardwert entsprechend eines Ammoniakadsorptionsbetrags des Katalysators (33, 34) zur selektiven Reduktion zum Zeitpunkt des Starts der Filterregenerationsverarbeitung variabel zu gestalten; und
die Filterregenerationsverarbeitung in einem Fall zu beenden, wenn der integrierte Wert von Zeit größer als der Standardwert ist.

2. Abgassteuerungsverfahren für einen Motor, versehen mit einem Filter (23), einem Katalysator (33, 34) zur selektiven Reduktion und einer Reduktionsmittelzuführvorrichtung (29), wobei der Filter (23) in einer Abgaspassage (17) des Motors bereitgestellt ist, wobei der Filter (23) Feststoffpartikel im Abgas erfasst, wobei der Katalysator (33, 34) zur selektiven Reduktion dem Filter (23) in der Abgaspassage (17) nachgelagert bereitgestellt ist, wobei der Katalysator (33, 34) zur selektiven Reduktion Stickoxid in dem Abgas durch eine Reaktion zur selektiven Reduktion unter Verwendung von Ammoniak als ein Reduktionsmittel reduziert, und wobei die Reduktionsmittelzuführvorrichtung (29) dazu ausgelegt ist, das Ammoniak dem Katalysator (33, 34) zur selektiven Reduktion zuzuführen, wobei das Abgassteuerungsverfahren Folgendes umfasst:
Ausführen der Filterregenerationsverarbeitung zum Regenerieren einer Fähigkeit des Filters (23) zum Erfassen der Feststoffpartikel;
Fortsetzen der Filterregenerationsverarbeitung in einem Fall, in dem ein integrierter Wert von Zeit, wenn eine Betttemperatur des Katalysators (33, 34) zur selektiven Reduktion während der Ausführung der Filterregeneration einen bestimmten Wert überschreitet, kleiner als oder gleich groß wie ein Standardwert ist, wobei der Standardwert entsprechend eines Ammoniakadsorptionsbetrags des Katalysators (33, 34) zur selektiven Reduktion zum Zeitpunkt des Starts der Filterregenerationsverarbeitung variabel ist; und
Beenden der Filterregenerationsverarbeitung in einem Fall, wenn der integrierte Wert von Zeit größer als der Standardwert ist.

## Revendications

1. Appareil de contrôle de gaz d'échappement pour un moteur, l'appareil de contrôle de gaz d'échappement comprenant :
un filtre (23) prévu dans un passage d'échappement (17) du moteur, le filtre (23) collectant une matière particulaire dans un gaz d'échappement ;
un catalyseur à réduction sélective (33, 34) prévu en aval du filtre (23) dans le passage d'échappement (17), le catalyseur à réduction sélective (33, 34) réduisant l'oxyde d'azote dans le gaz d'échappement par l'intermédiaire d'une réaction de réduction sélective en utilisant de l'ammoniac en tant qu'agent réducteur ;
un dispositif d'alimentation en agent réducteur (29) configuré pour effectuer l'alimentation en l'ammoniac au catalyseur à réduction sélective (33, 34) ; et
une unité de commande électronique (39) configurée pour :
réaliser un traitement de régénération de filtre pour régénérer une capacité du filtre (23) de collecter la matière particulaire ;
continuer le traitement de régénération de filtre au cas où une valeur de temps intégrée, lorsqu'une température de lit du catalyseur à réduction sélective (33, 34) durant l'exécution du traitement de régénération de filtre dépasse une certaine valeur, est inférieure ou égale à une valeur par défaut, dans lequel l'unité de commande électronique (39) est configurée pour faire en sorte que la valeur par défaut soit variable selon une quantité d'adsorption d'ammoniac du catalyseur à réduction sélective (33, 34) à l'instant de début du traitement de régénération de filtre ; et
terminer le traitement de régénération de filtre au cas où la valeur de temps intégrée est supérieure à la valeur par défaut.

2. Procédé de contrôle de gaz d'échappement pour un moteur pourvu d'un filtre (23), d'un catalyseur à réduction sélective (33, 34) et d'un dispositif d'alimentation en agent réducteur (29), le filtre (23) étant prévu dans un passage d'échappement (17) du moteur, le filtre (23) collectant une matière particulaire dans un gaz d'échappement, le catalyseur à réduction sélective (33, 34) étant prévu en aval du filtre (23) dans le passage d'échappement (17), le catalyseur à réduction sélective (33, 34) réduisant l'oxyde d'azote dans le gaz d'échappement par l'intermédiaire d'une réaction de réduction sélective en utilisant de l'ammoniac en tant qu'agent réducteur, et le dispositif d'alimentation en agent réducteur (29) étant configuré pour effectuer l'alimentation en l'ammoniac au catalyseur à réduction sélective (33, 34), le procédé de contrôle de gaz d'échappement comprenant :
la réalisation d'un traitement de régénération de filtre pour régénérer une capacité du filtre (23) de collecter la matière particulaire ;
la continuation du traitement de régénération de filtre au cas où une valeur de temps intégrée, lorsqu'une température de lit du catalyseur à réduction sélective (33, 34) durant l'exécution du traitement de régénération de filtre dépasse une certaine valeur, est inférieure ou égale à une valeur par défaut, dans lequel la valeur par défaut est variable selon une quantité d'adsorption d'ammoniac du catalyseur à réduction sélective (33, 34) à l'instant de début du traitement de régénération de filtre ; et
la terminaison du traitement de régénération de filtre au cas où la valeur de temps intégrée est supérieure à la valeur par défaut.
